# EUROPÄISCHE PATENTSCHRIFT

(11) **EP 1 572 499 B1**
(45) Veröffentlichungstag und Bekanntmachung des Hinweises auf die Patenterteilung: **18.07.2007**
(21) Anmeldenummer: 03775349.8
(22) Anmeldetag: 13.11.2003
(51) Int. Cl.: B60R 13/04, B60R 9/00

(54) **ABDECKVORRICHTUNG FÜR MONTAGEAUSSPARUNGEN IN DEN ABDECKLEISTEN EINES FAHRZEUGDACHES**
COVERING DEVICE FOR COVERING MOUNTING RECESSES IN THE COVER STRIPS OF A VEHICLE ROOF
DISPOSITIF DE RECOUVREMENT CONCU POUR DES EVIDEMENTS DE MONTAGE MENAGES DANS LES BAGUETTES DE RECOUVREMENT D'UN TOIT DE VEHICULE

(30) Priorität: 30.11.2002 DE 10256052
(43) Veröffentlichungstag der Anmeldung: 14.09.2005
(73) Patentinhaber: A. RAYMOND ET CIE, 38000 Grenoble (FR)
(72) Erfinder: TREMMEL, Günter, 79739 Schwörstadt (DE); VOLLMER, Jürgen, 79426 Buggingen (DE)
(74) Vertreter: Rüttgers, Joachim
(86) Internationale Anmeldenummer: PCT/EP2003/012670
(87) Internationale Veröffentlichungsnummer: WO 2004/050430

(56) Entgegenhaltungen:
- EP-A- 0 968 882
- DE-A- 19 840 294
- DE-U- 29 906 207
- FR-A- 2 687 964
- FR-A- 2 833 907

## Beschreibung

Die Erfindung bezieht sich auf eine Abdeckvorrichtung für Montageaussparungen in den Abdeckleisten eines Fahrzeugdaches nach den Merkmalen im Oberbegriff des Anspruchs 1.

Diese Montageaussparungen werden bei Abdeckleisten an den Stellen vorgesehen, wo sich im darunterliegenden Dachkanal Verankerungspunkte zur eventuellen Befestigung der Stützfüße von Dachgepäckträgern befinden. Solange dieses Befestigungsangebot nicht genutzt wird, werden die Aussparungen nicht nur zum Schutz der Befestigungsstelle sondern auch aus optischen Gründen in der Regel durch entsprechende Deckel verschlossen.

Aus DE 198 40 294 C2 ist eine gattungsgemäße Abdeckvorrichtung bekannt, bei welcher der die Aussparung in Schließstellung ausfüllende Klappdeckel in Leistenlängsrichtung vorstehende Lagerzapfen aufweist, welche in gerader Verlängerung der schwenkbaren Deckelkante angeformt sind. Dies hat zur Folge, daß die Lagerschalen unterhalb der Aussparung nahe am Rand der Aussparung angeordnet sind und der Deckel im hoch geschwenkten Zustand zwangsläufig die Aussparung entsprechend seiner Deckelstärke beengt.

Aufgabe der Erfindung ist es, die gattungsgemäße Abdeckvorrichtung so zu gestalten, daß der Klappdeckel den Zugang zur Aussparung in der Öffnungsstellung nicht behindert.

Diese Aufgabe wird nach der vorliegenden Erfindung dadurch gelöst, daß die Lagerzapfen an dem Klappdeckel über je einen U-förmigen Bügel angeformt sind, welcher derart bemessen ist, daß der Rand der Aussparung im hochgestellten Zustand des Klappdeckels in den Freiraum des Bügels hineinragt.

Durch diese Anordnung des Zapfendrehpunktes im Einsatzteil und die U-förmige Ausbildung des Klappen Bügels kann die Dachleisten Aussparung nahezu vollständig geöffnet werden. Die Dachklappe ist dann in der verrasteten Endposition soweit von der Aussparung zurück geklappt, daß die Füße des Dachgepäckträgers bequem an die Befestigungsstellen heran geführt und dort befestigt werden können.

Vorteilhafte Ausgestaltungen der Erfindung sind in den Unteransprüchen angegeben und aus den Zeichnungen ersichtlich, die ein bevorzugtes Ausführungsbeispiel der Erfindung darstellen und die nachfolgend näher beschrieben werden. Es zeigt:

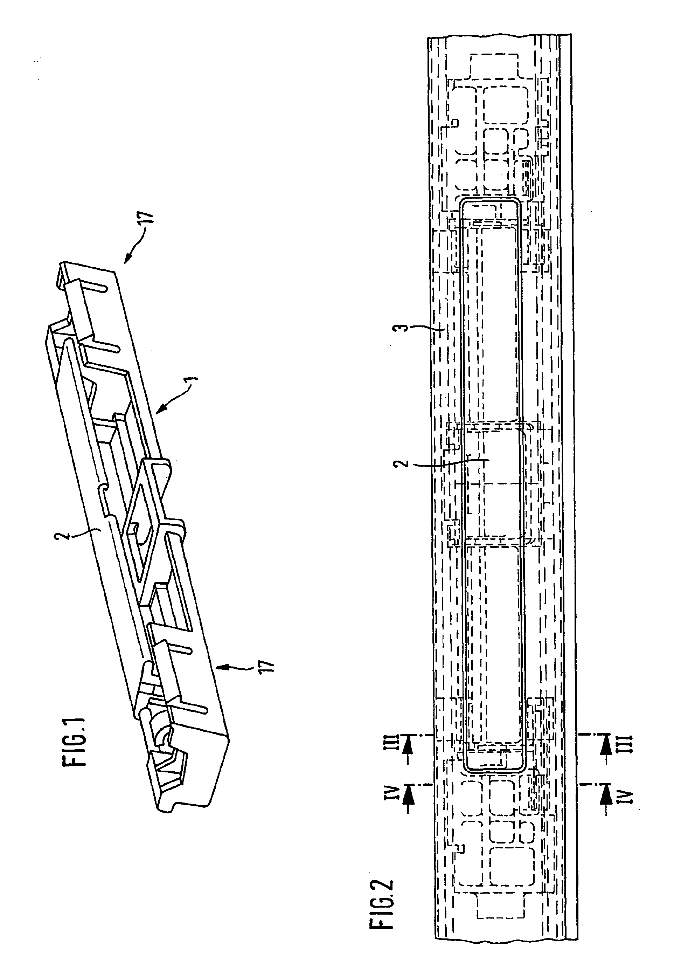

- Fig. 1: Die erfindungsgemäße Abdeckvorrichtung mit herunter geschwenktem Klappdeckel in perspektivischer Ansicht,
- Fig. 2: Ein Teilstück der Abdeckleiste eines Fahrzeugdaches mit abgedeckter Aussparung in Draufsicht,

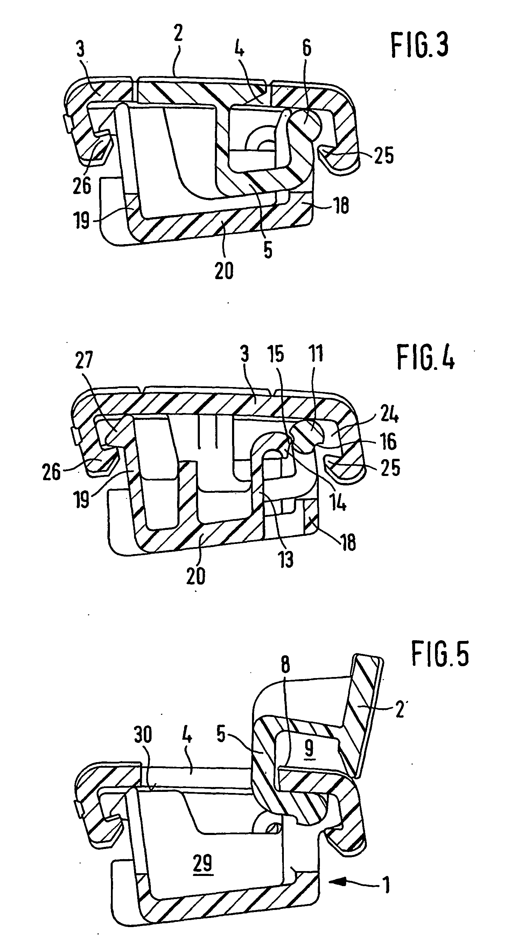

- Fig. 3: Einen Querschnitt durch die Abdeckleiste mit eingesetzter Abdeckvorrichtung bei geschlossenem Klappdeckel gemäß Linie III - III in Figur 2,
- Fig. 4: Den gleichen Querschnitt durch die Abdeckleiste gemäß Linie IV - IV in Figur 2
- Fig. 5: Den gleichen Querschnitt wie in Figur 3 mit geöffnetem Klappdeckel,

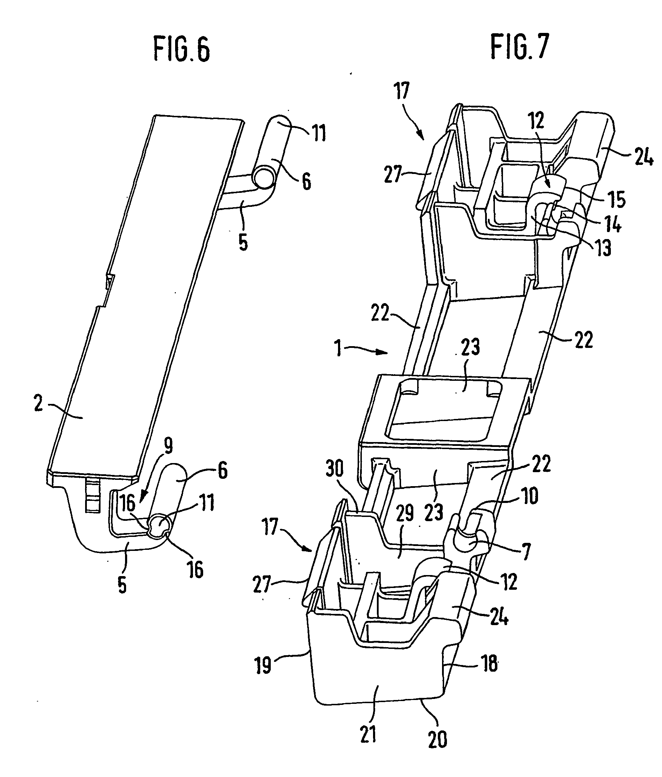

- Fig. 6: Den Klappdeckel in einer perspektivischen Draufsicht und
- Fig. 7: Das zugehörige Einsatzteil in perspektivischer Draufsicht.

Die in den Figuren dargestellte Abdeckvorrichtung dient zum Verschließen einer Montageaussparung 4 in einer Abdeckleiste 3 eines Fahrzeugdaches, solange die unter der Aussparung 4befindliche Befestigungsstelle für einen Dachgepäckträger nicht benötigt wird.

Diese Abdeckvorrichtung besteht hierbei aus einem in der Abdeckleiste 3 positionierbaren Einsatzteil 1 und einem Klappdeckel 2, welcher um eine Achse in Längsrichtung der Abdeckleiste 3 schwenkbar gelagert ist und die Aussparung 4 in Schließstellung ausfüllt. Der Klappdeckel 2 ist an beiden Enden über je einen U-förmigen Bügel 5 mit Lagerzapfen 6 verbunden, welche in am Einsatzteil 1 ausgebildeten Lagerschalen 7 schwenkbar eingelagert sind. Der Bügel 5 ist herbei so ausgebildet, daß der Rand 8 der Aussparung 4 im hoch geschwenkten Zustand des Klappdeckels 2 in den Freiraum 9 des u-förmigen Bügels 5 hineinragt.

Die Lagerschalen 7 umfassen die Lagerzapfen 6 über etwas mehr als die Hälfte ihres Umfangs, so daß die Lagerschalen 7 sich beim Eindrücken der Lagerzapfen 6 elastisch auseinander biegen und dann nach Passieren des Öffnungsengpasses wieder zusammen federn und dabei die Lagerzapfen 6 klemmend umfassen. Die Lagerschalen 7 sind an den einander zugekehrten Seiten mit seitlichen Anschlagwänden 10 versehen, durch welche die Lagerzapfen 6 nach dem Einlegen an den einander zugekehrten Enden in Längsrichtung der Lagerschalen 7 positioniert sind.

Die Lagerzapfen 6 weisen an den von einander weg gerichteten Enden sogenannte Rastzapfen 11 auf, die mit am Einsatzteil 1 angeformten Federelementen 12 derart zusammenwirken, daß die Rastzapfen 11 in Öffnungs- und Schließstellung des Klappdeckels 2 einrasten, so daß dieser Deckel 2 in beiden Endstellungen sicher gehalten wird. Diese Federelemente 12 sind im vorliegenden Ausführungsbeispiel als bogenförmige Federstege 13 ausgebildet, welche mit einem Ende am Einsatzteil 1 angeformt sind. Das andere elastisch auffederbare Ende ist im Bogen auf den Rastzapfen 11 weisend herumgeführt und an seiner Stirnseite 14 mit einer Rastkante 15 ausgebildet, die in entsprechend ausgebildete Rastrillen 16 auf dem Rastzapfen 11 in den besagten Endstellungen des Klappdeckels 2 einrasten.

Das den Klappdeckel 2 haltende Einsatzteil 1 besteht aus einem langgestreckten Grundkörper aus hart elastischem Kunststoff, der wie folgt aufgebaut ist:
An beiden Enden befinden sich Lagerkörper 17 mit zwei Seitenwänden 18 und 19 und einer Bodenplatte 20 sowie einer Stirnwand 21. Diese Lagerkörper 17 sind durch an der Bodenplatte 20 angeformte Stege 22 seitlich miteinander verbunden, welche in der Mitte durch Querrippen 23 gegeneinander festgelegt sind.

Die Lagerkörper 17 sind im Querschnitt so ausgebildet, daß diese in dem nicht dargestellten Dachkanal unterhalb der Abdeckleiste 3 Platz finden und mit deren nach innen umgebördelten Leistenkanten 25 und 26 einrastend verbunden werden können. Zu diesem Zweck sind am oberen Rand von einer Seitenwand 18 nach außen abstehende Haken 24 zum Eingreifen in die Leistenkante 25 angeformt und am oberen Rand der gegenüber liegenden Seitenwand 19 in einem beidseitig eingeschlitzten Bereich ebenfalls Rasthaken 27 angeformt, welche beim Eindrücken des Einsatzteils 3 nach innen federn und dann oberhalb der Leistenkante 26 wieder einrasten. Die übrigen Bereiche der Seitenwand 19 sind so bemessen, daß diese beim Einrasten der Haken 27 von unten an der Abdeckleiste 3 anschlagen.

Die beiden Lagerschalen 7 befinden sich am oberen Rand der Seitenwand 18 an den einander zugekehrten Seiten der Lagerkörper 1, während die Federstege 13 an einer Rippe 28 im Lagerkörper 17 so angeformt sind, daß die auswärts gebogenen Stirnseiten 14 mit den Rastkanten 15 auf die Rastzapfen 11 gerichtet sind. Der Abstand zwischen Lagerschale 7 und Federsteg 13 ist so bemessen, daß der Bügel 5 dazwischen einschwenken kann. Die innenliegende Querwand 29 zwischen den Seitenwänden 18 und 19 besitzt eine Auflagekante 30 zur Auflage des Klappdeckels 2 beim Einschwenken in die Schließstellung.

Die Montage der Abdeckvorrichtung ist denkbar einfach. Das Einsatzteil 1 wird von unten mit seinen Eingreifhaken 24 hinter die Leistenkante 25 der Abdeckleiste 3 schräg eingeführt und dann mit den Rasthaken 27 hochgedrückt, bis diese in der gegenüber liegenden Leistenkante 26 einrasten. Hierbei ist lediglich darauf zu achten, daß der vorher in die Lagerschalen 7 eingedrückte Klappdeckel 2 mittig in der Montageaussparung 4 der Abdeckleiste 3 ausgerichtet ist.

## Patentansprüche

1. Abdeckvorrichtung für eine Montageaussparung in einer Abdeckleiste eines Fahrzeugdaches, bestehend aus einem in der Abdeckleiste (3) positionierbaren Einsatzteil (1) und einem um eine Achse in Leistenlängsrichtung schwenkbar gelagerten, die Aussparung (4) in Schließstellung ausfüllenden Klappdeckel (2) mit an beiden Enden angeformten Lagerzapfen (6), welche in am Einsatzteil (1) ausgebildeten Lagerschalen (7) eingelagert sind, und Rastzapfen (11), welche mittels am Einsatzteil (1) angeformten, auf die Rastzapfen (11) einwirkenden Federelementen (12) in Öffnungs- und Schließstellung verrastbar sind, **dadurch gekennzeichnet, daß** die Lagerzapfen (6) an dem Klappdeckel (2) über je einen U-förmigen Bügel (5) angeformt sind, welcher derart bemessen ist, daß der Rand (8) der Aussparung (4) im hoch gestellten Zustand des Klappdeckels (2) in den Freiraum (9) des Bügels (5) hineinragt.

2. Abdeckvorrichtung nach Anspruch 1, **dadurch gekennzeichnet, daß** die einander zugekehrten Lagerzapfen (6) in den Lagerschalen (7) klemmend eingelagert sind und die Lagerzapfen (6) in entgegengesetzte Richtung Rastzapfen (11) aufweisen, die mit den Federelementen (12) zusammenwirken.

3. Abdeckvorrichtung nach Anspruch 1 oder 2, **dadurch gekennzeichnet, daß** die Lagerschalen (7) mit seitlichen Anschlagwänden (10) versehen sind, welche eine Positionierung der Lagerzapfen (6) in Längsrichtung der Abdeckleiste (3) gewährleisten.

4. Abdeckvorrichtung nach Anspruch 3, **dadurch gekennzeichnet, daß** die Lagerzapfen (6) mit Rillen (16) versehen sind, in welche entsprechend ausgebildete Rastkanten (15) an den Federelementen (12) in Öffnungs- und Schließstellung des Klappdeckels (2) einrasten.

5. Abdeckvorrichtung nach einem der Ansprüche 2 bis 4, **dadurch gekennzeichnet, daß** die Federelemente (12) als bogenförmige Federstege (13) ausgebildet sind, welche mit einem Ende am Einsatzteil (1) angeformt und mit dem anderen Ende auf den Rastzapfen (11) weisend herumgeführt sind, wobei an den Stirnseiten (14) der elastisch auffederbaren Enden die in die Rillen (16) einrastenden Rastkanten (15) ausgebildet sind.

## Claims

1. Covering device for a mounting recess in a cover strip of a vehicle roof, consisting of an insert part (1) which can be positioned in the cover strip (3) and a hinged cover (2), mounted so as to be pivotable about an axis in the longitudinal direction of the strip, filling the recess (4) in the closed position and having bearing journals (6) which are integrally formed at both ends and are mounted in bearing shells (7) formed on the insert part (1) and locking pegs (11) which are lockable in the opened and closed position by means of spring elements (12) integrally formed on the insert part (1) and acting on the locking pegs (11), **characterized in that** the bearing journals (6) are integrally formed on the hinged cover (2) via one U-shaped bow (5) each, which is dimensioned so that the edge (8) of the recess (4) projects into the free space (9) of the bow (5) when the hinged cover (2) is in the raised state.

2. Covering device according to Claim 1, **characterized in that** the bearing journals (6) facing one another are clamped in the bearing shells (7) and the bearing journals (6) have, in the opposite direction, locking pegs (11) which cooperate with the spring elements (12).

3. Covering device according to Claim 1 or 2, **characterized in that** the bearing shells (7) are provided with lateral stop walls (10) which ensure positioning of the bearing journals (6) in the longitudinal direction of the cover strip (3).

4. Covering device according to Claim 3, **characterized in that** the bearing journals (6) are provided with grooves (16) into which correspondingly formed snap edges (15) on the spring elements (12) snap when the hinged cover (2) is in the opened and closed position.

5. Covering device according to any of Claims 2 to 4, **characterized in that** the spring elements (12) are in the form of arch-shaped spring webs (13) which are led around with one end integrally formed on the insert part (1) and with the other end pointing towards the locking pegs (11), the snap edges (15) snapping into the grooves (16) being formed on the end faces (14) of the springy ends.

## Revendications

1. Dispositif d'obturation d'un évidement de montage d'une baguette de pavillon d'un véhicule automobile, se composant d'un élément rapporté (1) destiné à être inséré en position dans la baguette de pavillon (3) et d'un couvercle rabattable (2) monté pivotant autour d'un axe dans le sens longitudinal de la baguette de pavillon, remplissant l'espace correspondant à l'évidement (4) dans sa position de fermeture, comprenant, rendus solidaires de ses deux extrémités par moulage des tourillons (6) qui viennent s'insérer dans des coquilles de portée (7) ménagées dans l'élément rapporté (1), et des tétons d'accrochage (11) qui sont susceptibles d'être verrouillés en position d'ouverture et de fermeture par l'intermédiaire d'éléments élastiques agissant sur les tétons d'accrochage (11), réalisés solidaires par moulage de l'élément rapporté (1), **caractérisé en ce que** les tourillons (6) sont disposés sur le couvercle rabattable (2) respectivement par l'entremise d'un étrier en forme d'arceau (5) qui est dimensionné dans des conditions telles que le bord (8) de l'évidement (4) fait saillie dans l'espace intérieur libre (9) de l'étrier (5) lorsque le couvercle rabattable (5) est en position relevée.

2. Dispositif d'obturation selon la revendication 1, **caractérisé en ce que** les tourillons (6) se faisant respectivement face sont montés avec un effet de serrage en position dans les coquilles de portée (7) et **en ce que** les tourillons (6) sont munis de tétons d'accrochage (11) respectivement orientés dans le sens inverse, qui opèrent en combinaison avec les éléments élastiques (12).

3. Dispositif d'obturation selon la revendication 1 ou 2, **caractérisé en ce que** les coquilles de portée (7) sont munies de parois de butée latérales (10) qui permettent de positionner les tourillons (6) dans le sens longitudinal de la baguette de pavillon (3).

4. Dispositif d'obturation selon la revendication 3, **caractérisé en ce que** les tourillons (6) sont munis de rainures (16) qui viennent s'engager, dans les positions d'ouverture et de fermeture du couvercle rabattable (2), en prise d'encastrement dans des arêtes d'encliquetage (15), agencées et dimensionnés en correspondance, que comportent à cet effet les éléments élastiques (12).

5. Dispositif d'obturation selon l'une des revendications 2 à 4, **caractérisé en ce que** les éléments élastiques (12) se présentent sous la forme de barrettes entretoises en forme d'arc de cercle (13), dont une extrémité est réalisée solidaire par moulage de l'élément rapporté (1) et l'autre extrémité est orientée suivant un tracé en arc de cercle en direction des tétons d'accrochage (11), les arêtes d'accrochage (15) venant s'engager en prise d'encastrement dans les rainures (16) étant en l'occurrence réalisées au niveau des faces antérieures (14) des extrémités capables de céder par déformation élastique.
